# EUROPÄISCHE PATENTSCHRIFT

(11) **EP 3 470 318 B1**
(45) Veröffentlichungstag und Bekanntmachung des Hinweises auf die Patenterteilung: **20.11.2019**
(21) Anmeldenummer: 17450011.6
(22) Anmeldetag: 11.10.2017
(51) Int. Cl.: B62M 6/60, B62L 1/00, B62M 11/02, B62M 11/10

(54) **ELEKTRISCHE ANTRIEBSVORRICHTUNG FÜR EIN FAHRRAD**
ELECTRIC DRIVE DEVICE FOR A BICYCLE
DISPOSITIF D'ENTRAÎNEMENT ÉLECTRIQUE POUR UNE BICYCLETTE

(43) Veröffentlichungstag der Anmeldung: 17.04.2019
(73) Patentinhaber: Alpine Drive GmbH, 6080 Innsbruck-Igls (AT)
(72) Erfinder: Gruber, Reinhold, A-6161 Natters (AT); Gruber, Martin, A-1030 Wien (AT)
(74) Vertreter: Keschmann, Marc

(56) Entgegenhaltungen:
- US-A- 5 368 122
- US-A1- 2004 065 495

## Beschreibung

Die Erfindung betrifft eine elektrische Antriebsvorrichtung für ein Fahrrad, umfassend einen Elektromotor mit einer Abtriebswelle und ein Winkelgetriebe, mit welchem die Abtriebswelle antriebswirksam mit einem Rad des Fahrrads verbindbar ist.

Die Erfindung betrifft weiters ein Fahrrad umfassend einen Rahmen, ein Vorderrad und ein Hinterrad, welche jeweils drehbar am Rahmen gelagert sind, und weiters umfassend eine elektrische Antriebsvorrichtung.

Elektrofahrräder erfahren in den letzten Jahren zunehmend an Verbreitung und werden in verschiedensten Ausprägungen und mittlerweile auch in Europa in großen Stückzahlen gefertigt. Hohe Zuwachsraten verzeichnen auch Elektrofahrräder, welche auf Bergstrecken und im Gelände verwendet werden, so genannte Elektro-Mountain-Bikes. Es sind verschiedenste Einbauvarianten der elektrischen Antriebe in Verbreitung, welche von Nabenmotoren, Mittelmotoren, Reibungsmotoren, Kurbelmotoren bis hin zu Motoren reichen, welche im Sattel- oder Unterrohr des Rahmens eingebaut sind. Ebenso ist eine Variante bekannt, (DE 102010026405 A1), bei welcher der Elektro-Motor das Hinterrad direkt über ein Winkelgetriebe antreibt, wobei das angetriebene Kegelrad beispielsweise auf der Hinterrad-Bremsscheibe fixiert ist. Eine andere, aus dem Stand der Technik bekannte, Variante ist die US5368122, die eine elektrische Antriebsvorrichtung für ein Fahrrad offenbart, umfassend einen Elektromotor mit einer Abtriebswelle (output shaft) und ein Winkelgetriebe , mit welchem die Abtriebswelle antriebswirksam mit einem Rad des Fahrrads verbindbar ist, wobei eine Befestigungsvorrichtung, welche den Elektromotor trägt und welche zur Befestigung des Elektromotors an einer Drehachse des Rades ausgebildet ist.

Dokument US 2004/065495 zeigt ein weitere, aus dem Stand der Technik bekannte, Variante.

Bei allen bekannten Ausführungsvarianten ist der Antrieb entweder fix und untrennbar am Fahrradrahmen verbaut oder kann als Nachrüstsatz nachträglich in ein vorhandenes Fahrrad mehr oder weniger aufwendig eingebaut werden.

Die vorliegende Erfindung zielt darauf ab, eine elektrische Antriebsvorrichtung derart weiterzubilden, dass ein Fahrrad bei Bedarf in einfacher Weise mit einem elektrischen Antrieb nachgerüstet und der Antrieb in einfacher Weise wieder entfernt werden kann. Dabei sollen die Nachrüstung und die sichere Funktionsweise des Antriebs auch bei Fahrrädern mit beweglichen Rahmenteilen möglich bzw. gewährleistet sein, wie beispielsweise bei Fahrrädern mit Hinterradfederung.

Zur Lösung dieser Aufgabe besteht ein erster Aspekt der Erfindung bei einer elektrischen Antriebsvorrichtung für Fahrräder im Wesentlichen darin, dass eine Befestigungsvorrichtung vorgesehen ist, welche den Elektromotor trägt und welche zur Befestigung des Elektromotors an einer Drehachse des Rades ausgebildet ist. Durch die Befestigung des Elektromotors an der Drehachse des angetriebenen Rades ist eine definierte Position des Motors relativ zum Rad und daher ein optimaler Eingriff des Winkelgetriebes gewährleistet. Insbesondere ist die Anordnung des Elektromotors von allfälligen Relativbewegungen von Rahmenteilen relativ zum angetriebenen Rad unbeeinträchtigt. Die erfindungsgemäße elektrische Antriebsvorrichtung kann daher auch ohne weiteres für den Antrieb eines gefederten Hinterrades eingesetzt werden.

Die Befestigung der Befestigungsvorrichtung an der Radachse ermöglicht außerdem eine schnelle Montage und Demontage des Antriebs, wobei insbesondere eine für die Befestigung des Rades am Fahrradrahmen vorhandene oder vorgesehene Schnellmontageeinrichtung, wie z.B. eine Schnellspanneinrichtung, für die Befestigung der Befestigungsvorrichtung mitverwendet werden kann. Der Antrieb kann daher ohne Werkzeug befestigt und wieder abgenommen werden.

Die Befestigung an der Drehachse des Rades ermöglicht es, die Antriebsvorrichtung um die Drehachse drehbar anzuordnen, d.h. in einer wählbaren Winkelausrichtung zu positionieren, und dann in der gewählten Winkelausrichtung zu fixieren. Dadurch kann die Antriebsvorrichtung in einfacher Weise an jener Stelle positioniert werden, welche zum jeweiligen Fahrradrahmen passt. Somit kann eine Vielzahl an Fahrradmarken und Typen bedient werden. Die Fixierung der Befestigungsvorrichtung an der Drehachse in der gewünschten Position kann bevorzugt mit Hilfe einer Klemmung oder Verschraubung stufenlos erfolgen.

Im Rahmen der Erfindung bedeutet die Befestigung der Befestigungsvorrichtung an der Drehachse des Rades, dass die Befestigungsvorrichtung insbesondere an einem aus der Radnabe herausragenden Bereich der Drehachse, bevorzugt an einem freien Ende der Drehachse, befestigt ist. Von der Erfindung sind daher Ausführungen nicht umfasst, bei denen der Antrieb in eine Radnabe integriert ist (Nabenmotor).

Die erfindungsgemäße Antriebsvorrichtung ist zum nachträglichen Einbau in vorhandene Fahrräder konzipiert, kann aber natürlich auch in neue Fahrräder eingebaut und zusammen mit dem Antrieb vertrieben werden.

Die erfindungsgemäße Antriebsvorrichtung umfasst ein Winkelgetriebe, mit welchem die Abtriebswelle des Motors antriebswirksam mit einem Rad des Fahrrads verbindbar ist. Die Befestigung der Antriebsvorrichtung erfolgt hierbei bevorzugt derart, dass die Abtriebswelle sich radial zur Drehachse des Rades erstreckt. Insbesondere ist die Befestigungsvorrichtung zur Befestigung des Antriebs derart ausgebildet, dass die gedachte Verlängerung der Abtriebswelle die Drehachse des Rades schneidet, entweder im Winkel von 90 Grad oder, in einer anderen Ausführungsart, in einem von 90 Grad verschiedenen Winkel..

Das Winkelgetriebe ist als Kegelradgetriebe ausgebildet, dessen Tellerrad drehfest an dem Rad, insbesondere einer Nabe oder einer Bremsscheibe des Rades, befestigbar ist, und dessen Kegelritzel an der Abtriebswelle angeordnet ist.

Gemäß der Erfindung weist die Befestigungsvorrichtung eine Halterung für den Elektromotor auf und umfasst eine sich von der Halterung, vorzugsweise parallel zur Abtriebswelle, vom Elektromotor weg erstreckende Befestigungslasche, die zur Befestigung an einer Drehachse des Rades, vorzugsweise um diese drehbar, ausgebildet ist. Die Befestigungslasche erstreckt sich seitlich des Elektromotors und nur auf einer Seite desselben, sodass zwischen Befestigungslasche und dem Getriebeelement, insbesondere dem Tellerrad, ein ausreichender Abstand für die Anordnung des Antriebsritzels, insbesondere Kegelritzels verbleibt.

Bevorzugt ist hierbei vorgesehen, dass die Befestigungsvorrichtung, insbesondere die Befestigungslasche, eine Ausnehmung, insbesondere Bohrung, zur Aufnahme der Drehachse des Rades derart aufweist, dass die Achse der Ausnehmung, insbesondere Bohrung, die gedachte Verlängerung der Abtriebswelle schneidet, entweder im Winkel von 90 Grad oder, in einer anderen Ausführungsart, in einem von 90 Grad verschiedenen Winkel. Die Befestigungslasche kann daher auf die Drehachse aufgeschoben oder aufgeschraubt werden, wobei dadurch sogleich die richtige Ausrichtung der Abtriebswelle - nämlich die Drehachse des Rades schneidendgewährleistet ist.

Die in der Folge erforderliche Fixierung der Befestigungsvorrichtung erfolgt dadurch, dass die Befestigungsvorrichtung, insbesondere die Befestigungslasche, Feststellmittel zur Fixierung ihrer axialen Position auf der Drehachse des Rades aufweist.

Die Feststellmittel können eine Klemmvorrichtung, insbesondere eine Exzenterklemme, umfassen.

Durch die erwähnte Fixierung wird bevorzugt gleichzeitig auch die Winkelausrichtung der Antriebsvorrichtung, d.h. der Drehwinkel um die Drehachse des Rades, fixiert, sodass dadurch eine Verdrehsicherung geschaffen ist, die verhindert, dass die Antriebsvorrichtung sich auf Grund der Antriebskraft bzw. der Reaktionskraft um die Drehachse des Rades dreht.

Eine solche Wirkung kann alternativ oder ergänzend auch dadurch erzielt werden, dass die Befestigungsvorrichtung Verbindungsmittel zur starren Verbindung mit einem nicht mitrotierenden Bauteil des Fahrrads, vorzugsweise mit einem Bremssattel oder einer Bremssattelaufnahme einer Scheibenbremse des Hinterrades, aufweist.

Die Erfindung betrifft gemäß einem zweiten Aspekt ein Fahrrad umfassend einen Rahmen, ein Vorderrad und ein Hinterrad, welche jeweils drehbar am Rahmen gelagert sind, und weiters umfassend eine elektrische Antriebsvorrichtung gemäß dem ersten Aspekt der Erfindung, deren Befestigungsvorrichtung auf der Drehachse des Hinterrades, befestigt ist, wobei ein Getriebeelement des Winkelgetriebes mit dem Hinterrad, insbesondere einer Nabe oder einer Bremsscheibe des Hinterrades, drehfest verbunden ist, sodass die Abtriebswelle des Elektromotors über das Winkelgetriebe antriebswirksam mit dem Hinterrad verbunden ist.

Bevorzugt schneidet die gedachte Verlängerung der Abtriebswelle die Drehachse des Hinterrades.

Bevorzugt ist die Befestigungsvorrichtung, insbesondere die Befestigungslasche, drehfest auf der Drehachse des Hinterrades fixiert.

Bevorzugt ist die Befestigungsvorrichtung, insbesondere die Befestigungslasche, mittels der Klemmvorrichtung, insbesondere der Exzenterklemme, drehfest auf der Drehachse des Hinterrades fixiert.

Bevorzugt ist die Befestigungsvorrichtung mittels der Verbindungsmittel mit einem nicht mitrotierenden Bauteil des Fahrrads, vorzugsweise mit einem Bremssattel oder einer Bremssattelaufnahme einer Scheibenbremse des Hinterrades, starr verbunden.

Bevorzugt durchsetzt die Drehachse des Hinterrades die Ausnehmung, insbesondere Bohrung, der Befestigungsvorrichtung, insbesondere der Befestigungslasche.

Bevorzugt durchsetzt die Drehachse des Hinterrades einen Rahmenteil, insbesondere ein Ausfallende, des Fahrrads im axialen Bereich zwischen dem Getriebeelement, insbesondere dem Tellerrad, des Winkelgetriebes und der Befestigungslasche.

Bevorzugt weist das Getriebeelement, insbesondere das Tellerrad, des Winkelgetriebes und die Bremsscheibe des Hinterrades miteinander fluchtende Bohrungen auf, welche Befestigungsmittel, insbesondere Schrauben zur Befestigung an der Radnabe aufnehmen. Dadurch kann die vorhandene Verschraubung der Bremsscheibe im Rahmen der Nachrüstung des Fahrrads mit dem erfindungsgemäßen elektrischen Antrieb zur Befestigung des Tellerrads mitverwendet werden.

Die Erfindung wird nachfolgend anhand eines in der Zeichnung schematisch dargestellten Ausführungsbeispiels näher erläutert. In dieser zeigen Fig. 1 eine Seitenansicht eines Fahrrads mit am Hinterrad angeordneter Antriebsvorrichtung, Fig. 2 eine Detailansicht der Hinterradbremsscheibe samt Antrieb und Fig. 3 eine schematische Schnittansicht der Antriebsvorrichtung.

Der Antrieb umfasst eine Antriebseinheit 1, die einen Elektromotor 2, vorzugsweise einen bürstenlosen Gleichstrommotor, eine auf der Drehachse 3 des Hinterrades des Fahrrads befestigbare Befestigungsvorrichtung 4, ein Kegelradgetriebe 5, eine elektrische Steuervorrichtung 6, eine Sensorik 7 zum Messen der Pedalumdrehungszahl, eine wiederaufladbare Batterie (nicht dargestellt) und eine Bedieneinheit 8, welche vorzugsweise am Lenker 9 montiert wird und die Steuersignale entweder verkabelt, oder über Funk (zB Bluetooth) an die Steuereinheit 6 übermittelt.

Der erfindungsgemäße Elektroantrieb treibt direkt über das Kegelradgetriebe 5 das Hinterrad 10 des Fahrrads an. Das Kegelradgetriebe 5 umfasst das Kegelritzel 21 auf der Abtriebswelle und das Kegelrad (Tellerrad) 13. Das Hinterrad 10 der für den Einbau geeigneten Fahrräder wird üblicherweise mit einer Schnellspannachse oder einer sogenannten Steckachse am Rahmen 11 befestigt. Gemäß gegenständlicher Erfindung kann die vorhandene Schnellspannachse oder vorhandene Steckachse gegen eine verlängerte Drehachse 3 in der Weise ausgetauscht werden, dass sie wie die Standardachse durch den Rahmen 11 und die Nabe 22 geschoben wird und auf der gegenüber liegenden Seite entweder mit einer Mutter oder über das Gewinde im Rahmen verschraubt wird. Die verlängerte Drehachse 3 hat weiters auf der Antriebsseite einen Kopf 12, welcher erfindungsgemäß zur Aufnahme der Befestigungsvorrichtung 4 der Antriebseinheit 1 dient.

Das angetriebene Kegelrad 13 des Kegelradgetriebes 5 ist bevorzugt so gefertigt, dass es zusammen mit den vorhandenen Schrauben der Hinterrad-Bremsscheibe 14 montiert werden kann. Eine andere Ausführungsart für Fahrräder ohne Scheibenbremse besteht darin, dass das angetriebene Kegelrad 13 auf der Hinterradnabe durch einen Adapter fixiert werden kann. Durchmesser und Stärke des angetriebenen Kegelrades 13 sind bevorzugt genau so konstruiert, dass es zwischen Fahrradrahmen 11 und Bremsscheibe 14 Platz hat. Nach Montage des angetriebenen Kegelrades 13 und Austausch der Drehachse 3 wird die Antriebseinheit 1 über eine Bohrung in der Befestigungslasche 15 der Befestigungsvorrichtung 4 stufenlos auf den Achsen-Kopf 12 geschoben und bevorzugt mit einer Klemme an jener Stelle fixiert, welche zum genauen Eingriff der Kegelräder passt. Die Klemmvorrichtung kann direkt in der Befestigungsvorrichtung 4 integriert sein. Die Klemmung kann z.B. über einen Exzenterhebel oder über eine Verschraubung erfolgen.

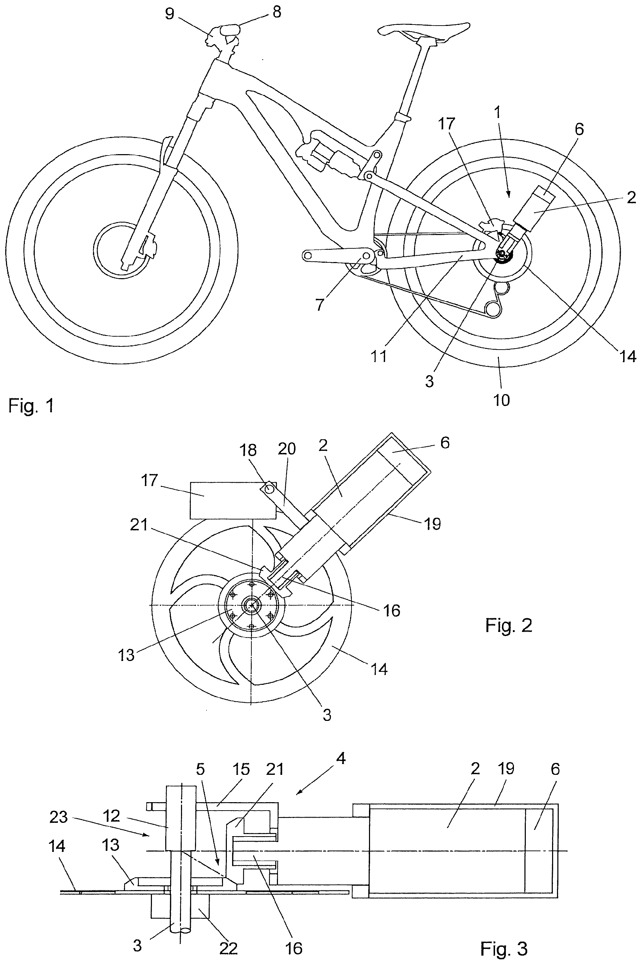

Die Abtriebsachse 16 der Antriebseinheit 1 schneidet die Drehachse 3 des Hinterrades 10 entweder im Winkel von 90 Grad oder, in einer anderen Ausführungsart, in einem von 90 Grad verschiedenen Winkel. Die Länge des Kopfes 12 der Drehachse 3 ist bevorzugt so konstruiert, dass alle gängigen Breiten der Fahrradrahmen bedient werden können. Im Bereich zwischen der Befestigungslasche 15 und dem Kegelrad 13 durchsetzt die Achse 3 bzw. der Kopf 13 den Rahmen (in Fig. 3 nicht dargestellt).

Die Drehmomentkräfte werden einerseits über die Befestigung der Antriebseinheit 1 auf dem Achskopf 12 und zusätzlich über eine außermittige Verbindung der Befestigungsvorrichtung 4 mit dem Fahrradrahmen 11, vorzugsweise über eine bei jedem Fahrrad mit Scheibenbremse vorhandenen Bremssattelaufnahme 17, aufgenommen. Eine Ausführung dieser Verbindung kann einen Runddorn 18, welcher an der Bremssattelaufnahme 17 montiert wird, und einen gelochten, drehbar an der Befestigungsvorrichtung 4 gelagerten Verbindungsteil 20 umfassen.

Der Elektromotor 2 ist vorzugsweise in einem wasserdichten Gehäuse 19 aufgenommen.

In einer weiteren Ausführung wird die Steuervorrichtung 6 direkt mit dem Elektromotor 2 wasserdicht im Gehäuse 19 integriert.

In einer weiteren Ausführung wird die Steuervorrichtung 6 und die Batterie direkt mit dem Elektromotor 2 wasserdicht im Gehäuse 19 integriert.

In einer weiteren Ausführung wird die Position der Antriebseinheit 1 nicht über eine Klemmung am Achs-Kopf 12 fixiert, sondern über eine Gewindehülse, welche in die Motorhalterung eingeschraubt und bei Erreichen der richtigen Position zum genauen Eingriff der Kegelräder mittels eines Schraubringes gekontert und mit einer Exzenterklemme am Fahrradrahmen fixiert werden kann.

## Patentansprüche

1. Elektrische Antriebsvorrichtung (1) für ein Fahrrad, umfassend einen Elektromotor (2) mit einer Abtriebswelle (16) und ein Winkelgetriebe (13), mit welchem die Abtriebswelle (16) antriebswirksam mit einem Rad des Fahrrads verbindbar ist, weiters umfassend eine Befestigungsvorrichtung (4), welche den Elektromotor (2) trägt und welche zur Befestigung des Elektromotors an einer Drehachse (3) des Rades ausgebildet ist, wobei das Winkelgetriebe als Kegelradgetriebe (13) ausgebildet ist, dessen Tellerrad (13) drehfest an dem Rad, insbesondere einer Nabe (22) oder einer Bremsscheibe (14) des Rades, befestigbar ist, und dessen Kegelritzel (21) an der Abtriebswelle (16) angeordnet ist, wobei die Befestigungsvorrichtung (4) eine Halterung für den Elektromotor (2) aufweist und eine sich von der Halterung, vorzugsweise parallel zur Abtriebswelle (16), vom Elektromotor (2) weg erstreckende Befestigungslasche (15) umfasst, die sich lediglich auf einer Seite des Elektromotors (2) erstreckt und die unter Anordnung eines von der Drehachse (3) des Rades durchsetzten Rahmenteils (11) des Fahrrades zwischen der Befestigungslasche (15) und dem Tellerrad (13) zur Befestigung an der Drehachse des Rades, vorzugsweise um diese drehbar, ausgebildet ist, und wobei die Befestigungsvorrichtung 4) Feststellmittel zur Fixierung ihrer axialen Position auf der Drehachse (3) des Rades aufweist.

2. Elektrische Antriebsvorrichtung nach Anspruch 1, **dadurch gekennzeichnet, dass** die Befestigungsvorrichtung, insbesondere die Befestigungslasche, eine Ausnehmung, insbesondere Bohrung, zur Aufnahme der Drehachse des Rades derart aufweist, dass die Achse der Ausnehmung, insbesondere Bohrung, die gedachte Verlängerung der Abtriebswelle entweder im Winkel von 90 Grad oder in einem von 90 Grad verschiedenen Winkel schneidet.

3. Elektrische Antriebsvorrichtung nach Anspruch 1 oder 2, **dadurch gekennzeichnet, dass** die Feststellmittel eine Klemmvorrichtung, insbesondere eine Exzenterklemme, umfassen.

4. Elektrische Antriebsvorrichtung nach einem der Ansprüche 1 bis 3, **dadurch gekennzeichnet, dass** die Befestigungsvorrichtung Verbindungsmittel zur starren Verbindung mit einem nicht mitrotierenden Bauteil des Fahrrads, vorzugsweise mit einem Bremssattel oder einer Bremssattelaufnahme einer Scheibenbremse des Hinterrades, aufweist.

5. Fahrrad umfassend einen Rahmen, ein Vorderrad und ein Hinterrad, welche jeweils drehbar am Rahmen gelagert sind, und weiters umfassend eine elektrische Antriebsvorrichtung nach einem der Ansprüche 1 bis 4, deren Befestigungsvorrichtung auf der Drehachse des Hinterrades, befestigt ist, wobei das Tellerrad des Winkelgetriebes mit dem Hinterrad, insbesondere einer Nabe oder einer Bremsscheibe des Hinterrades, drehfest verbunden ist, sodass die Abtriebswelle des Elektromotors über das Winkelgetriebe antriebswirksam mit dem Hinterrad verbunden ist.

6. Fahrrad nach Anspruch 5, **dadurch gekennzeichnet, dass** die gedachte Verlängerung der Abtriebswelle die Drehachse des Hinterrades schneidet.

7. Fahrrad nach Anspruch 5 oder 6, **dadurch gekennzeichnet, dass** die Befestigungsvorrichtung, insbesondere die Befestigungslasche, drehfest auf der Drehachse des Hinterrades fixiert ist.

8. Fahrrad nach Anspruch 5, 6 oder 7, **dadurch gekennzeichnet, dass** die Befestigungsvorrichtung, insbesondere die Befestigungslasche, mittels der Klemmvorrichtung, insbesondere der Exzenterklemme, drehfest auf der Drehachse des Hinterrades fixiert ist.

9. Fahrrad nach einem der Ansprüche 5 bis 8, **dadurch gekennzeichnet, dass** die Befestigungsvorrichtung mittels der Verbindungsmittel mit einem nicht mitrotierenden Bauteil des Fahrrads, vorzugsweise mit einem Bremssattel oder einer Bremssattelaufnahme einer Scheibenbremse des Hinterrades, starr verbunden ist.

10. Fahrrad nach einem der Ansprüche 5 bis 9, **dadurch gekennzeichnet, dass** die Drehachse des Hinterrades die Ausnehmung der Befestigungsvorrichtung, insbesondere der Befestigungslasche, durchsetzt.

11. Fahrrad nach einem der Ansprüche 5 bis 10, **dadurch gekennzeichnet, dass** die Drehachse des Hinterrades im axialen Bereich zwischen dem Getriebeelement, insbesondere dem Tellerrad, des Winkelgetriebes und der Befestigungslasche einen Rahmenteil, insbesondere ein Ausfallende, des Fahrrads durchsetzt.

12. Fahrrad nach einem der Ansprüche 5 bis 11, **dadurch gekennzeichnet, dass** das Tellerrad des Winkelgetriebes und die Bremsscheibe des Hinterrades miteinander fluchtende Bohrungen aufweisen, welche Befestigungsmittel, insbesondere Schrauben zur Befestigung an der Radnabe aufnehmen.

## Claims

1. An electric drive device (1) for a bicycle, comprising an electric motor (2) with an output shaft (16) and an angular gear (13) by which the output shaft (16) is connectable to a wheel of the bicycle in a drive-effective manner, further comprising a fastening device (4) carrying the electric motor (2) and configured to fasten the electric motor to a rotation axis (3) of the wheel, wherein the angular gear is designed as a bevel gear (5) whose crown wheel (13) is non-rotationally securable to the wheel, in particular a hub (22) or a brake disc (14) of the wheel, and whose bevel gear pinion (21) is arranged on the output shaft (16), wherein the fastening device (4) comprises a holding means for the electric motor (2) and a fastening lug (15) extending from the holding means, preferably in parallel with the output shaft (16), away from the electric motor (2), which fastening lug only extends on one side of the electric motor (2) and, with a frame part (11) of the bicycle, which is penetrated by the rotation axis (3), arranged between the fastening lug (15) and the crown wheel (13), is configured for fastening to the rotation axis of the wheel, preferably in a manner rotatable thereabout, and wherein the fastening device (4) comprises locking means for fixing its axial position on the rotation axis (3) of the wheel.

2. An electric drive device according to claim 1, **characterized in that** the fastening device, in particular the fastening lug, comprises a recess, in particular a bore, for receiving the rotation axis of the wheel in such a manner that the axis of the recess, in particular bore, intersects the imaginary extension of the output shaft either at an angle of 90° or at an angle different from 90°.

3. An electric drive device according to claim 1 or 2, **characterized in that** the locking means comprise a clamping device, in particular an eccentric clamp.

4. An electric drive device according to any one of claims 1 to 3, **characterised in that** the fastening device comprises connecting means for the rigid connection to a non-corotating component of the bicycle, preferably a brake caliper or a brake caliper socket of a disc brake of the rear wheel.

5. A bicycle comprising a frame, a front wheel and a rear wheel, which are each rotationally mounted on the frame, and further comprising an electric drive device according to any one of claims 1 to 4, whose fastening device is secured to the rotation axis of the rear wheel, wherein the crown wheel of the angular gear is non-rotationally connected to the rear wheel, in particular a hub or a brake disc of the rear wheel, so that the output shaft of the electric motor is drive-effectively connected to the rear wheel via the angular gear.

6. A bicycle according to claim 5, **characterized in that** the imaginary extension of the output shaft intersects the rotation axis of the rear wheel.

7. A bicycle according to claim 5 or 6, **characterized in that** the fastening device, in particular the fastening lug, is non-rotationally fixed to the rotation axis of the rear wheel.

8. A bicycle according to claim 5, 6 or 7, **characterized in that** the fastening device, in particular the fastening lug, is non-rotationally fixed to the rotation axis of the rear wheel by the clamping device, in particular the eccentric clamp.

9. A bicycle according to any one of claims 5 to 8, **characterized in that** the fastening device is rigidly connected to a non-corotating component of the bicycle, preferably a brake caliper or a brake caliper socket of a disc brake of the rear wheel, by the connecting means.

10. A bicycle according to any one of claims 5 to 9, **characterized in that** the rotation axis of the rear wheel penetrates the recess of the fastening device, in particular the fastening lug.

11. A bicycle according to any one of claims 5 to 10, **characterized in that** the rotation axis of the rear wheel penetrates a frame part, in particular a dropout, of the bicycle in the axial region between the gear element, in particular the crown wheel, of the angular gear and the fastening lug.

12. A bicycle according to any one of claims 5 to 11, **characterized in that** the crown wheel of the angular gear and the brake disc of the rear wheel comprise mutually aligned bores receiving fastening means, in particular screws, for fastening to the wheel hub.

## Revendications

1. Dispositif de propulsion électrique (1) pour un vélo,
comprenant un moteur électrique (2) avec un arbre de sortie (16) et un engrenage conique (13), avec lequel l'arbre de sortie (16) peut être relié à une roue du vélo de manière efficace pour la propulsion, comprenant en outre un dispositif de fixation (4) qui porte le moteur électrique (2) et qui est conçu pour fixer le moteur électrique à un axe de rotation (3) de la roue, dans lequel l'engrenage conique est conçu comme un engrenage à roues coniques (13) dont la roue en couronne (13) peut être fixée, solidaire en rotation, à la roue, en particulier à un moyeu (22) ou à un disque de frein (14) de la roue, et dont le pignon conique (21) est agencé sur l'arbre de sortie (16), dans lequel le dispositif de fixation (4) inclut un support pour le moteur électrique (2) et comprend un collier de fixation (15) qui s'étend à partir du support, de préférence parallèlement à l'arbre de sortie (16), à l'opposé du moteur électrique (2) et qui s'étend seulement d'un côté du moteur électrique (2) et est conçu, en agençant une pièce de cadre (11) du vélo, traversée par l'axe de rotation (3) de la roue, entre le collier de fixation (15) et la roue en couronne (13), en vue de la fixation au niveau de l'axe de rotation de la roue, de préférence de manière à pouvoir tourner autour de celui-ci, et dans lequel le dispositif de fixation 4) inclut des moyens de blocage destinés à fixer sa position axiale sur l'axe de rotation (3) de la roue.

2. Dispositif de propulsion électrique selon la revendication 1, **caractérisé en ce que** le dispositif de fixation, en particulier le collier de fixation, inclut un évidement, en particulier un trou, destiné à recevoir l'axe de rotation de la roue de telle sorte que l'axe de l'évidement, en particulier du trou, croise le prolongement imaginaire de l'arbre de sortie soit sous un angle de 90 degrés soit sous un angle différent de 90 degrés.

3. Dispositif de propulsion électrique selon la revendication 1 ou 2, **caractérisé en ce que** les moyens de blocage comprennent un dispositif de serrage, en particulier une pince excentrique.

4. Dispositif de propulsion électrique selon l'une quelconque des revendications 1 à 3, **caractérisé en ce que** le dispositif de fixation inclut des moyens d'assemblage pour l'assemblage rigide avec une pièce, non solidaire en rotation, du vélo, de préférence avec un étrier de frein ou un logement d'étrier de frein d'un frein à disque de la roue arrière.

5. Vélo comprenant un cadre, une roue avant et une roue arrière, qui sont montées sur le cadre de manière à pouvoir tourner, et comprenant en outre un dispositif de propulsion électrique selon l'une quelconque des revendications 1 à 4, dont le dispositif de fixation est fixé sur l'axe de rotation de la roue arrière, dans lequel la roue en couronne de l'engrenage conique est reliée de manière solidaire en rotation à la roue arrière, en particulier à un moyeu ou à un disque de frein de la roue arrière, de telle sorte que l'arbre de sortie du moteur électrique peut être relié à la roue arrière par l'intermédiaire de l'engrenage conique de manière efficace pour la propulsion.

6. Vélo selon la revendication 5, **caractérisé en ce que** le prolongement imaginaire de l'arbre de sortie coupe l'axe de rotation de la roue arrière.

7. Vélo selon la revendication 5 ou 6, **caractérisé en ce que** le dispositif de fixation, en particulier le collier de fixation, est fixé de manière solidaire en rotation sur l'axe de rotation de la roue arrière.

8. Vélo selon la revendication 5, 6 ou 7, **caractérisé en ce que** le dispositif de fixation, en particulier le collier de fixation, est fixé de manière solidaire en rotation sur l'axe de rotation de la roue arrière au moyen du dispositif de serrage, en particulier de la pince excentrique.

9. Vélo selon l'une quelconque des revendications 5 à 8, **caractérisé en ce que** le dispositif de fixation est assemblé de manière rigide à l'aide des moyens d'assemblage, avec une pièce, non solidaire en rotation, du vélo, de préférence avec un étrier de frein ou un logement d'étrier de frein d'un frein à disque de la roue arrière.

10. Vélo selon l'une quelconque des revendications 5 à 9, **caractérisé en ce que** l'axe de rotation de la roue arrière traverse l'évidement du dispositif de fixation, en particulier du collier de fixation.

11. Vélo selon l'une quelconque des revendications 5 à 10, **caractérisé en ce que** l'axe de rotation de la roue arrière traverse une partie de cadre du vélo, en particulier une extrémité, dans la zone axiale entre l'élément d'engrenage, en particulier la roue en couronne, de l'engrenage conique et le collier de fixation.

12. Vélo selon l'une quelconque des revendications 5 à 11, **caractérisé en ce que** la roue en couronne de l'engrenage conique et le disque de frein de la roue arrière incluent des trous, alignés l'un avec l'autre, qui logent des moyens de fixation, en particulier des vis destinées à la fixation au moyeu de roue.
